# EUROPEAN PATENT APPLICATION

(11) **EP 1 273 510 A2**
(43) Date of publication of application: **08.01.2003**
(21) Application number: 02015004.1
(22) Date of filing: 04.07.2002
(51) Int. Cl.: B62M 11/16, B62H 5/04, B62H 5/14

(54) **Handlebar control device for bicycles, bicycle hub, and antitheft system connecting the aforementioned devices**

(30) Priority: 04.07.2001 JP 2001202976
(71) Applicant: Shimano Inc., Osaka 590-8577 (JP)
(72) Inventor: Itou, Minoru, Toyoura-Gun, Yamaguchi (JP); Shoge, Akihiko, Shimonoseki-shi, Yamaguchi (JP)
(74) Representative: Wallinger, Michael, Dr.

(57) **Abstract**

The handle control device for bicycles restricts the rotation of the front fork being rotably supported on a head tube of a bicycle frame, and comprises a rotable member, a stationary member, a rotation restriction means, and a locking means. The rotable member rotates coupled to the front fork, and the stationary member is provided non-rotably at the head tube. The rotation restriction means has an operating element which is movable between the position of restriction and the position at which the restriction is released (restriction release position) and restricts the relative rotation of the rotable member and stationary member at the position of restriction and releases this restriction at restriction release position. The locking means comprises a lock with an attachable and detachable key and a rocking element movable by said key, and a movable element that is movable coupled to the movement of the rocking movement, and locks aforementioned operating element at the restriction position by action of the movable element when the operating element is located at said restriction position.

## Description

### 1. Field of the Invention

The invention relates to a handle control device for bicycles which can take a first state of restriction, wherein the rotation of the bicycle front fork is restricted, and a first restriction release state, wherein this restriction is released, a bicycle hub which can take a second restriction state, wherein the rotation of a bicycle wheel is restricted, and a second restriction release state, wherein this restriction is released, and an antitheft system for bicycles connecting these devices.

### 2. Summary of Prior Art

Handles for steering bicycles are mounted rotably on the head tube of the bicycle frame. Such a handle can rotate if an unbalanced load is applied thereto. Specifically, the handle can rotate together with the front wheel when the bicycle is parked with a loaded front basket. A handle control device restricting the rotation of the handle is disclosed in utility model JP-Y 7-17666.

This known handle control device comprises a rotable member that rotates coupled to the handle, a stationary member holding the rotable member, a locking element which locks the rotation of the rotable member and releases this lock by means of engaging one engagement portion provided at one of said members with an engagement portion provided at the other member, and a slide mechanism which disengages the lock between the lock element and the engagement portion in the direction of the rotation. Since the rotation of the rotable member can be locked by the engagement of the locking element with the engagement portion by moving the locking element, this known handle control device can restrict the rotation of the handle and thereby prevents the bicycle from turning over. When riding the bicycle in a state of restricted handle rotation, the handle can be actuated again by application of a definite torque since the rotation member can be rotated by the slide mechanism if a torque exceeding a definite value is applied.

Since they are easy to ride, bicycles are frequently used for commutation and attending school. However, bicycles are often stolen even without malice when a "thief" just intends to "borrow" the bicycle for a short while. A bicycle hub restricting the rotation of the bicycle wheel in order to prevent from such thefts is disclosed in JP-A 10-230877. This antitheft device is provided e.g. at the bicycle hub, performs a restriction and a release of restriction when the hub shell and the hub axle of the bicycle hub are in a rotable state, and produces a sound in the state of restriction. This antitheft device comprises a cam member rotably mounted around the hub axle, a movable member that is moved in the direction of the hub axle by the rotation of the cam member, and a restriction member which is movable by the movement of said movable member between engagement position whereat it engages non-rotably with the hub shell and disengagement position and presses on the movable member when located at the engagement position.

Furthermore, for the prevention of a locking of the wheel due to wrong operation, the rotation between the restriction member and the movable member is restricted to such a level whereat the wheel is allowed to rotate when a proper torque is applied to the wheel. Moreover, a sound is produced when the wheel rotates during the state of restriction.

For the operation of this device, an operating unit is provided at the handlebar, and the restriction is protected by locking the operating unit with a key or by inputting a secret number. By installation of an antitheft device with this construction it can be made difficult to turn the rear wheel and theft prevention can be supported.

### 3. Disadvantages to be solved by the Invention

It can be considered to use aforementioned known handle control device which allows a restriction of the handle rotation as an antitheft device for bicycle since a bicycle theft would be made more difficult when the handle is locked in rotated (bent) state by the handle control device. However, aforementioned known handle control device allows locking the rotable member by moving the locking element but the handle can be operated again by simply moving back the locking element in its original position. Therefore, it is impossible to use this handle control device as antitheft device.

On the other hand, the antitheft device using the aforementioned known bicycle hub is disadvantageous since the movable member is moved in direction of the hub axle by a cam member rotably mounted around the hub axle, so that a mechanism for the conversion of the movement from rotary to axial movement is required and the mechanism for moving the movable member would be quite complicated.

Accordingly, one object of the invention is to provide a handle control device for bicycles that can be applied as antitheft device.

Another object of the invention is to provide a bicycle hub being usable as antitheft device and having a simple construction so that it can be produced with low cost.

Another object of the invention is to provide a more reliable antitheft system which makes use of the bicycle hub.

### 4. Summary of the Invention

The handle control device for bicycles according to claim 1 restricts the rotation of the front fork being rotably supported on a head tube of a bicycle frame, and comprises a rotable member, a stationary member, a rotation restriction means, and a locking means. The rotable member rotates coupled to the front fork, and the stationary member is provided non-rotably at the head tube. The rotation restriction means has an operating element which is movable between the position of restriction and the position at which the restriction is released (restriction release position) and restricts the relative rotation of the rotable member and stationary member at the position of restriction and releases this restriction at restriction release position. The locking means comprises a lock with an attachable and detachable key and a rocking element movable by said key, and a movable element that is movable coupled to the movement of the rocking movement, and locks aforementioned operating element at the restriction position by action of the movable element when the operating element is located at said restriction position.

This handle control device restricts the relative rotation between the rotable and the stationary member by moving the operating element of the rotation restriction means into the position of restriction. Then the movable element is moved by operation of the key of the locking means and the resulting rocking movement of the rocking element, so that the operating element is fixed immovable at the position of restriction. When the key is pulled off from the lock, the operating element is kept in the immovable state and thereby locked. Moreover, when the lock of the operating element is released with the key and the operating element is moved from the position of restriction to the restriction release position, the rotable and the stationary member can rotate again relative to each other and the handle can be turned again without restriction. This arrangement keeps the front fork (handle) in a state of restricted rotation since the locked state of the operating element cannot be released as long as it is locked by the locking means at the position of restriction and the key is not used. Since the handle is difficult to operate when the state of restricted rotation is locked, the prevention against theft is improved. Therefore, this handle control device performs the function of an antitheft device.

The handle control device for bicycles according to claim 2 has, in addition to the device according to claim 1, a first cable engagement portion arranged at the rotation restriction means and being engageable with a control cable. This embodiment of the invention allows a remote operation of the device, specifically of the restriction, and allows a connection with other antitheft devices so that better theft prevention is achieved.

The handle control device for bicycles according to claim 3 uses, in addition to the device according to claim 1 or 2, a lever element being provided rotably around the head tube axle as operating element. This allows performing the restriction with ease while being seated on the bicycle before dismounting by turning the lever element around.

The handle control device for bicycles according to claim 4 has, in addition to the device according to one of the claims 1 to 3, a base member provided non-rotably at the head tube. The lock is fixed on this base plate and the movable member is arranged on the base member in such a manner that it can perform a forward and backward movement relative to the operating element. Since the lock and the movable element are mounted on this base plate which is provided at the head tube with the operating element mounted thereto, the movable element can be easily moved in forward and backward direction relative to the operating element.

The handle control device for bicycles according to claim 5 is a device according to claim 1 to 4, wherein the rotation restriction means allows a relative rotation of the rotating element when it is located at the restriction position and a torque exceeding a definite value acts on it. This arrangement allows, when the bicycle is mistakenly driven in a state of restricted rotation, the operation of the handle since the handle (rotable member) is allowed to rotate when a torque with a definite minimum value acts on the rotation restriction means (from the handle via the rotable member).

The bicycle hub according to claim 6 constitutes a wheel being rotably mounted on a bicycle frame and comprises a hub axle, a rod member, a hub shell, a rotation restriction means, and a coupling means. The hub axle is mounted non-rotably on the bicycle frame and has a first guide portion being open to the first end of the hub axle and formed parallel to the axle core, and a second guide portion formed in radial direction relative to the first guide portion and having two ends both opened towards the circumferential face. The rod member mounted movable in axial direction in the first guide portion, and the hub shell is mounted rotably on the hub axle. The rotation restriction means is mounted non-rotably on the circumferential face of the hub axle and movable in aforementioned axial direction between a first position at which it is connected non-rotably with the hub shell and a second position at which it detaches from the hub shell. The coupling means is mounted axially movably in the second guide portion and moves said rotation restriction means coupled to the movement of said rod member.

In the case of this bicycle hub the rotation restriction means is moved by the coupling means between a first and a second position in direction of the hub axle when the rod member mounted on the first guide portion of the hub axle is moved. The rotation of the hub shell is restricted when the rotation restriction means is moved to the first position, and this restriction is released when the rotation restriction means is moved to the second position. Since here the rotation restriction means is moved in direction of the hub axle by a rod member provided movably in said direction, the orientation of the movements is similar. Therefore, the coupling means can be designed in a simpler way, so that the invention provides a bicycle hub that can be produced at low cost due to its simplified construction.

The bicycle hub according to claim 7 has, additionally to the hub of claim 6, a coupling means with a key member having two ends protruding into the second guide portion. In this case, the coupled movement of the rotation restriction means with the rod member is realized by a very simple construction, i.e. said key with two protruding ends.

The bicycle hub according to claim 8 has, additionally to the hub of claim 6 or 7, a pushing means being mounted on the axle hub and able to apply pressure on the protruding end of the rod member which is arranged in a way that one of its ends protrudes from the first end of the hub axle, and a second cable engaging means located at said pushing means and engageable with the control cable for the operation of aforementioned rotation restriction means. This embodiment of the invention allows, by engaging the control cable with the second cable engagement portion, a remote operation of the device, specifically of the restriction, and allows a connection with other antitheft devices so that better theft prevention is achieved.

The bicycle hub according to claim 9 is a device as described in one of the claims 6 to 8, wherein the rotation restriction means allows a rotation relative to the hub axle when it is located at aforementioned first position and a torque exceeding a definite value acts on the hub shell. In this case driving of the bicycle can be continued without locking of the wheels even if the rotation restriction means has been placed at the first position by maloperation.

The bicycle hub according to claim 10 is a hub according to claim 10 that additionally produces a sound if the rotation restriction means has been placed at the first position. In this case a sound is produced in addition to the restriction of rotation when the rotation restriction means is located at the first position. This provides a better protection from theft because in the case of a theft this sound makes the theft known to the surroundings.

The bicycle hub according to claim 11 is a hub as described in the claims 6 to 10 having a driving element for transmission of the revolution of the bicycle crank onto the hub shell. In this case an antitheft function can be added to the hub for the driven rear wheel.

The bicycle hub according to claim 12 is a hub as described in claim 11 additionally having a speed change means with a plurality of speed steps being arranged between the driving element and the hub shell. In this case an antitheft function can be added to rear wheel hubs with an interior speed change function which are mounted on relatively high-priced bicycles which have a high risk of being stolen.

The bicycle hub according to claim 13 is a hub as described in claim 12, wherein speed changes can be performed from the first end of the axle hub and its second end located at the opposite side of said first end. In this case it is possible to perform the operation of speed change from one end of the hub axle and the rotation restriction from its other end, therefore the rotation restriction operation can be performed apart from speed change operations. This allows coupling the theft protection by restriction of rotation with other antitheft devices in order to provide a stronger theft protection.

The antitheft system for bicycles according to claim 14 comprises a handle control device for bicycles, a bicycle hub and a control cable. The handle control device for bicycles can take a first state of restriction, wherein the rotation of the bicycle front fork is restricted, and a first restriction release state, wherein this restriction is released. The bicycle hub can take a second restriction state, wherein the rotation of a bicycle wheel is restricted, and a second restriction release state, wherein this restriction is released. The control cable connects said handle control device and said bicycle hub and changes the state of the bicycle hub from the second state of restriction to the second restriction release state and vice versa accordingly to changes between the first state of restriction and the first restriction release state. In this case the handle control device for bicycles and the bicycle hub are connected by the control cable which allows to set both into the restriction state by coupling the handle control device and the hub. Therefore, it becomes difficult to release the restriction performed by the handle control device and the hub and a better protection against theft is provided.

The antitheft system for bicycles according to claim 15 is an antitheft system as described in claim 14, wherein the handle control device for bicycles is a handle control device for bicycles according to one of the claims 2 to 5.

The antitheft system for bicycles according to claim 16 is an antitheft system as described in claim 14, wherein the bicycle hub is a bicycle hub according to claim 6 to 13.

The antitheft system for bicycles according to claim 17 is an antitheft system as described in claim 16, wherein the control cable is engageable with the first cable engagement portion and the second cable engagement portion.

### Embodiments of the Invention

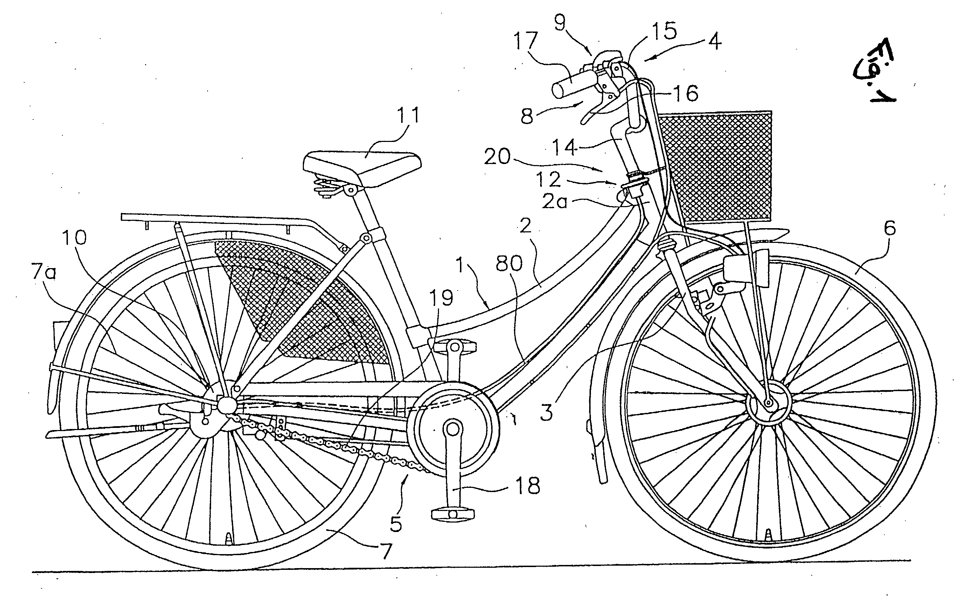

The bicycle as shown in fig. 1, whereto one embodiment of the invention is applied, is a light bicycle comprising a frame 1 with a double loop type frame body 2 and a front fork 3, a handle section 4, a drive section 5, a front wheel 6, a rear wheel with a three speed interior speed change hub 10 mounted thereon, a front and rear brake device 8 and a speed change operation section 9 for manual operation of the interior speed change hub 10.

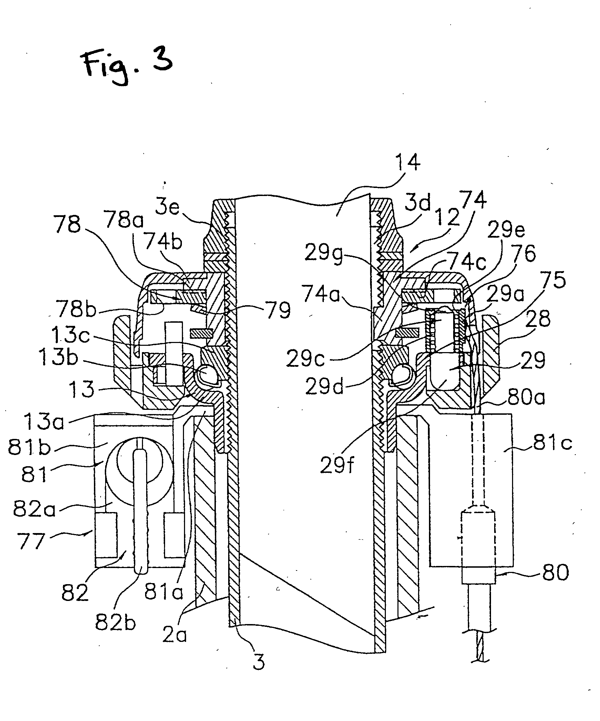

Sections comprising a saddle 11, the handle section 4, the front wheel 6 and the rear wheel 7 are fixed at the frame 1. The frame body 2 is formed by several welded pipes including a head tube 2a which rotably supports the front fork 3 being provided at the front portion of frame body 2. The front fork 3 has the form of a pipe in its upper part and has a bifurcated lower part supporting the front wheel 6. Its pipe-shaped upper part is, as shown in fig. 3, ratably supported via a pair of bearings 13 (only their upper side is shown in the drawing) being arranged at the upper and lower end of the head tube 2a. The bearing 13 comprises a pair of ball supports 13a being pressed into the upper and lower end of the head tube 2a, a plurality of balls 13b being arranged in the circumferential direction of the ball supports 13a, and a ball pressing member 13c pressing the balls 13b onto the ball supports 13a. On the upper outer circumferential surface of the front fork 3 a split groove 3d and a male thread 3e are formed. The ball pressing member 13c is screwed onto this male thread 3e.

The handle section 4 comprises a handle control section 12 restricting the rotation of the front fork 3, a handle stem 14 fixed on the upper part of the front fork 3 and a handlebar 15 fixed at this handle stem 14.

### Constitution of the Handle Control Section

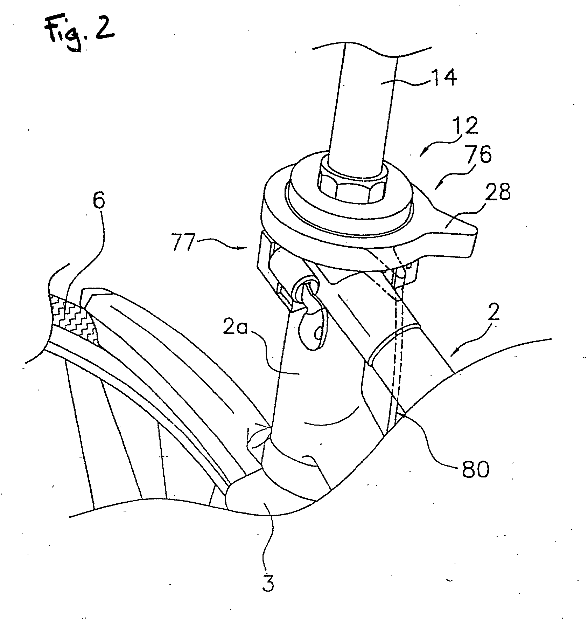

The handle control section 12 constitutes an antitheft system 20 can take a state of restriction, wherein the rotation of the handle section 4 is restricted via the front fork 3, and a state, wherein this restriction is released (restriction release state). The handle control section 12 comprises, as shown in fig. 2 and fig. 3, a rotable member 74 performing a rotary movement coupled to the rotation of the front fork 3, a stationary member 75 provided non-rotably on the head tube 2a, a rotation restriction mechanism 76 restricting the relative rotation of the rotable member 74 towards the stationary member 75, and a locking mechanism 77 which locks the rotation restriction mechanism 76 in the state of restriction.

The rotable member 74 has the shape of a cylinder and is arranged in touch with the ball pressing member 13c. In addition, it has a protruding portion 74a axially extending on its inner side and engaged with the split groove 3d. By this, the rotable member 74 performs a rotating movement together with the front fork 3. On the upper end of the rotable member 74 a disk-shaped flange 74b with a relative long diameter is integrally formed with the rotable member 74. On the underside of the flange 74b in fig. 3 a corrugated section 74c with the shape of a ray is formed. An engaging disk 78 is mounted on the underside of the flange 74b

The engagement disk 78 is a ring-shaped member with a larger diameter than the rotable member 74, rotably mounted on the rotable member 74, and is pressed onto the flange 74b by a spring 79 shaped like a corrugated plate. By this, the engagement disk 78 is pressed onto the flange 74b with a definite force. On the contact area of the engagement disk 78 with the flange 74b a ray-shaped, corrugated area 78a is formed similar to the corrugated section 74c. At the outer circumference of the engagement disk 78 a plurality of engagement holes 78b vertically bored through the disk is arranged. These holes are arranged with a pitch in circumferential direction.

The member 75 is formed integrally with the ball support 13a and protrudes from its outer circumference in radial direction. The restriction section 29 of the rotation restriction mechanism 76 is mounted on the stationary member 75.

The rotation restriction mechanism 76 comprises a lever element 28 arranged around the head tube 2a and being rotably between the restriction position and the restriction release position, and a restriction section 29 mounted on the stationary member 75. The restriction section 29 can perform a forward and backward movement towards the engagement holes 78b of the engagement disk 78.

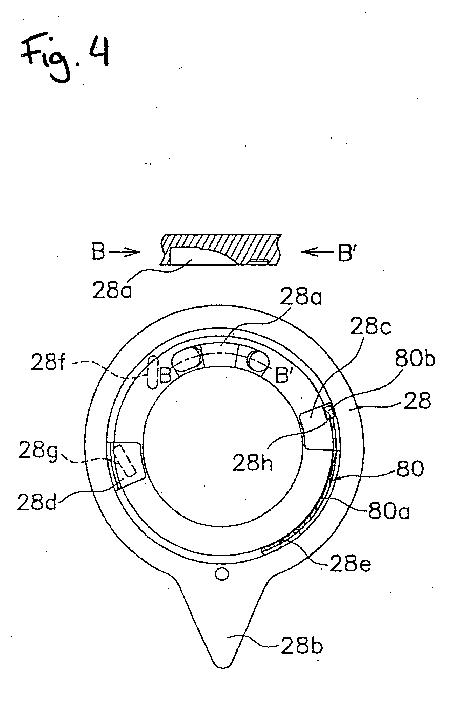

The synthetic resin made lever element 28 is a member more or less with the shape of a closed cylinder and has the task to perform the operation for the rotation restriction. As shown in fig. 4, the face of the upper bottom of the lever element 28 has a curved inclined cam face 28a with the task to move the restriction section 29. On the circumferential surface almost centrally symmetric with the cam face 28a an operation projection 28b is provided for the rotational operation.

The cam face 28a moves the restriction pin 29c (described later) of the restriction section 29 accordingly to the rotation of the lever element 28, the retreating position (indented portion) and the advancing position (projecting portion) are connected by a smooth curve. At the restriction release position and the restriction position it is formed with a slight indentation. The restriction pin 29 is provided in the indentation so that a click feeling can be obtained.

The operation projection 28b projects in radial direction. At the face of the upper bottom between the cam face 28a and the operation projection 28b a pair of projecting portions 28c, 28d projecting in axial direction are formed. The projecting portion 28c has an inner engagement section 28h in order to fix a knob 80b by engagement. This knob 80b is fixed at the tip of the inner cable 80a of the control cable 80 which is connected with the interior speed change hub 10. In addition, between the projecting portion 28c and the operation projection a long hole 28e is formed. The inner cable 80a and the knob 80b fixed at its tip can pass through this long hole 28e. Furthermore, long engagement grooves 28f, 28g for engaging the locking mechanism 77 at the restriction position and the restriction release position are formed with a pitch in circumferential direction.

The restriction section 29 comprises a guide member 29a provided at the stationary member 75, a restriction pin 29c mounted on the guide member 29a so that it can advance and retreat, and a coil spring 29d pressing on the restriction pin 29c in the direction of its backward movement. The guide member 29a stands on the stationary member 75, has a guide hole 29e allowing the restriction pin 29c to pass through, and guides the restriction pin 29c at a position opposed to the engagement holes 78b of the engagement disk 78 so that it can perform a forward and backward movement. The restriction pin 29c has a section 29f with a larger diameter at its lower end and an acutely conical section 29g. The rotation of the rotable member 74 is restricted when the restriction pin 29c is engaged in an engagement hole 78b. The underside of the section 29f with a larger diameter is contacting the cam face 78b and is movable (coupled to the movement of the lever element 28) from its backward position (restriction release position) and forward position (restriction position) and vice versa. The coil spring 29d is mounted around the restriction pin 29c in a compressed state and is engaged around the section 29f with a larger diameter and the guide hole 29e of the guide member 29a.

The locking mechanism 77 comprises, as shown in fig. 3, fig. 5, and fig. 6, a base member 81 non-rotably provided at the head tube 2a, a lock 82 mounted on the base member 81, and a movable member 83 which is moved towards the lever element 28 by the lock 82.

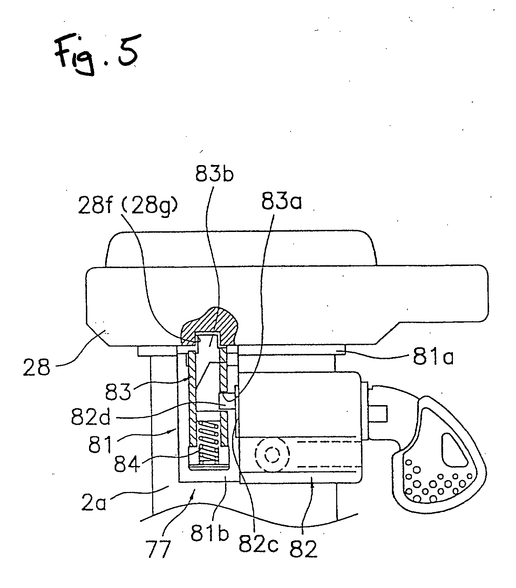

The base member 81 comprises a supporting section 81a being sandwiched between the upper end of the head tube 2a and the ball support 13a, a lock mounting section 81b which is formed integrally at both sides of the supporting section 81a, and a cable guiding section 81c. At the lock mounting section 81b the lock 82 is detachably fixed and the movable member 83 is guided here so that it can move forward and backward (cf. fig. 5). At the cable guiding section 81c, an inner guide section 81d and an outer engagement section 81e are formed. The inner guide section 81d bends the inner cable 80a being inserted into the control cable 80 from below so that it is guided to the lever element 28 in the circumferential direction. The outer engagement section 81e holds the outer casing 80c (of the control cable 80) by engagement. The stabilized inner cable 80a passes through the long hole 28e and is hold by the inner engagement section 28h by engagement.

The lock 82 comprises a lock body 82a mounted on the lock mounting section 81b, a key 82b being detachable from the lock body 82a, and a rocking element 82c being movable by the key 82b. The rocking element 82c has a rocking pin 82d which is engaged with the movable member 83. When the movable member 83 is at its advanced (forward) position, the key 82b is attachable to and detachable from the lock 82, the movable member 83 is hold at its advanced (forward) position by the lock 82.

The movable member 83 is a disk-shaped member with its cross-section being bent like the character C. It is guided on the base member 81 so that it can perform a forward and backward movement toward the lever element 28. On the way it has a notched section 83a that engages with the rocking pin 82d. By the engagement of the rocking pin 82d with the notched section 83a the rocking movement of the rocking element 82c is changed to a linear vertical movement of the movable member 83 toward the lever element 28. At the tip of the movable member 83 an engagement projection 83b from one edge of the C to the other is formed with the shape of letter I. This engagement projection 83b latches into one of the long engagement grooves 28f, 28g formed in the lower bottom of the lever element 28. The movable member 83 is pressed in forward movement direction by the coil spring 84 which is arranged on the base member 81 in a compressed state. When the engagement projection 83b is engaged in the long engagement groove 28f, the movable member 83 locks the lever element 28 in the restriction position, when the engagement projection 83b is engaged in the long engagement groove 28g, the lever element 28 is locked in the restriction release position. Thereby, the lever element 28 of the restriction mechanism 76 is locked in a state of restriction or of restriction release.

According to the handle control section 12 with the constitution as described above, the lever element 28 is held by the locking mechanism 77 in the locked state at the restriction position and its locked state can only be released by using the key 82b. Therefore, the front fork 3 (handle section 4) is kept in a state wherein its rotation is restricted. Since it is difficult to operate the handle section 4 in this state of restricted rotation, a potential theft of the bicycle is made more difficult. Therefore, the handle section 4 has the function of an antitheft device.

On both ends of the handlebar 15 a brake device 8 constituted by a brake lever 16 and a grip 17 is mounted (cf. fig. 1). Furthermore, on its right end a speed change operation section 9 is provided. The speed change operation section 9 is mounted at the handlebar 15 on the inside of the brake lever 16 and connected to the interior speed change hub 10 by a speed change cable 73 consisting of an inner cable and an outer casing. Since the speed change operation section 9 is a usual speed change operation section with a winding lever to wind up the inner cable and a release lever which releases the winding operation as performed by the winding lever and unwinds the inner cable, a detailed description of the speed change operation section 9 is omitted here.

The drive section 5 comprises a crank 18 provided under the frame body 2 (hanger section), a chain 19 suspended over the crank 18 and the interior speed change hub 10.

### Constitution of the Interior Speed Change Hub

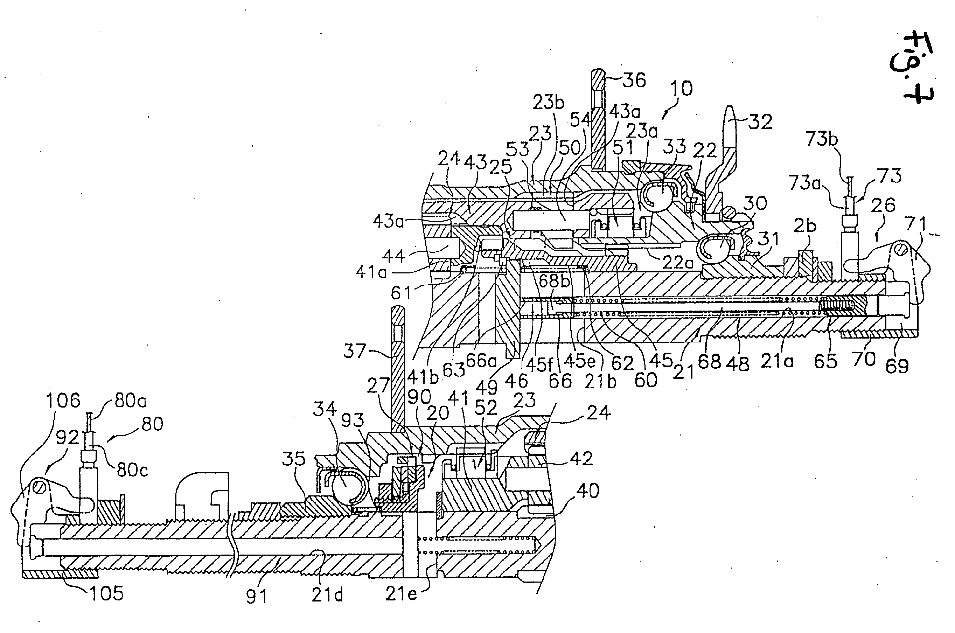

The interior speed change hub 10 is a three-step speed change hub with power transmission paths for deceleration, direct coupling, and acceleration. As shown in fig. 7, the interior speed change hub 10 comprises a hub axle 21 fixed at a back claw 2b arranged at the frame body 2 of the bicycle, a drive element 22 provided on the circumference of one end of the hub axle 21, a hub shell 23 arranged on the further circumference of the hub axle 21 and the drive element 22, a planetary gear mechanism 24, a speed change operation mechanism 25 for the selection of the power transmission path, a first bell crank 26 for the actuation of the speed change operation mechanism 25, and a rotation restriction mechanism 27.

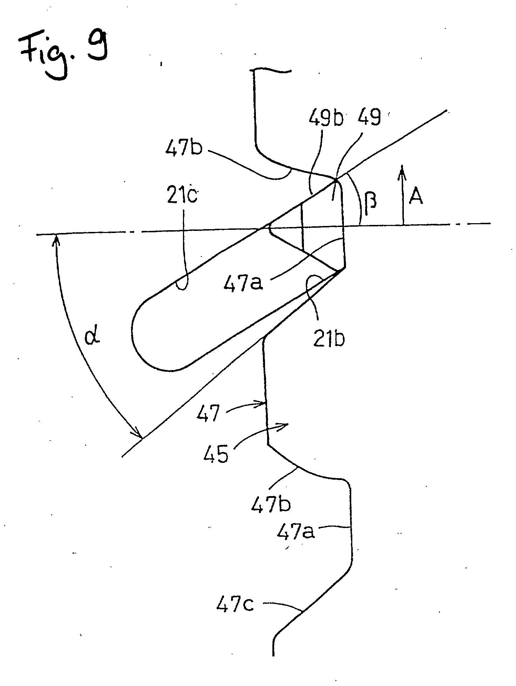

The hub axle 21 is a rod-shaped member with a larger diameter in its middle portion than at its end portions and with threads formed at both ends. In the center of the hub axle 21 a first operation hole 21a for changing the speed is formed extending from the right edge of fig. 7 to its central section. Near to the bottom of the first operation hole 21a a first through groove 21b through the axle center is formed. This first through groove 21b is omitted in fig. 7 but, as shown in fig. 9, it passes through the axle center of the hub axle 21 with a definite angle of inclination β relative to the axle center and is formed twisted reversed to the direction of progression from right to left in fig. 7. A first through groove 21b of this kind can be formed by first forming a hole through the axle center using an end mill with a definite diameter and then driving the end mill forward to the center in axial direction while gently rotating the hub axle 21 in the direction of the progression. Therefore, this kind of a first through groove 21b has the shape of a through hole crossed at both ends and helically continuing with a slow rotation according to the axial motion. The groove inclination angle β is preferably within a range from 1° to 55°.

Furthermore, the axle center portion of the hub axle 21 has a second operation hole 21d for the restriction of rotation extending from the left edge of fig. 7 to its central section. Beginning at the bottom of the second operation hole 21d a second through groove 21e is formed more or less at the axle end. This second through groove 21e is not twisted like the first through groove 21b, but it is a linearly formed long hole groove.

One end of the drive element 22 is rotably supported on the hub axle 21 via a ball 30 and a ball pressing member 31, on the outer circumference of this end a small gear 32 is fixed, whereupon the chain 19 is wound. On the inner circumference of the other end of the drive element 22 a plurality of serrated internal teeth 22a is formed in axial direction.

The hub shell 23 is a cylindrical member with a housing space 23a inside which contains the drive element 22 and the planetary gear mechanism 24. The hub shell 23 can be rotated around the hub axle 23 via the balls 33, 34 and the ball pressing member 35. On the outer circumference of the hub shell 23 at both of its ends hub flanges 36, 37 are fixed in order to support the spokes 7a (cf. fig. 1).

### Constitution of the Planetary Gear Mechanism

The planetary gear mechanism 24 comprises a sun gear 40 integrally formed and concentric with the hub axle 21, a gear frame 41 arranged on the outer circumference of the hub axle 21, three planet gears 42 geared with the sun gear 40 (in the drawing only one planet gear is shown), and a ring gear 43.

The gear frame 41 is a cylindrical member and supported rotably on the hub axle 21. The gear frame 41 has three notched sections 41a being formed in circular direction. Each of the notched sections 41a rotably supports one planet gear 42 by means of a pin 44. On the inner circumference of one end of the gear frame 41 a plurality of serrated internal teeth 41b is formed.

The ring gear 43 has almost the shape of a cylinder and extends from the planet gears 42 to the outer circumference of the drive element 22. On the other end of the ring gear 43 internal teeth 43b are formed on its inner circumference. The planet gears 42 are geared, as stated above, with the sun gear 40 and at the same time with the internal teeth 43b of the ring gear 43.

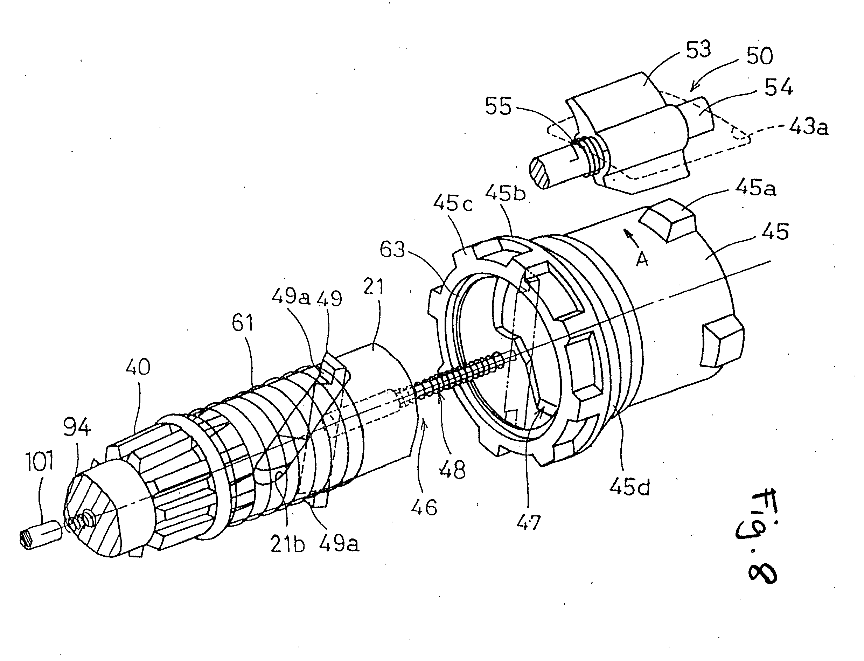

At one end of the ring gear 43 a notched section 43b is formed wherein a clutch claw 53 constituting a first one-way clutch 50 is supported by a pin 54. The clutch claw 53 is, as shown in fig. 8, pressed in upright position by a twisted coil spring 55. The first one-way clutch 50 only allows a power transmission from the ring gear 43 onto the hub shell 23 in progressive direction. The clutch claw 53 will only engage with the ratchet tooth 23b being formed on the inner circumferential face of the hub shell 23 when the ring gear 43 has rotated into the progressive direction. In the state when power transmission is possible (rotation of ring gear 43 in progressive direction), this first one-way clutch can be shifted between a power transmission state wherein the clutch claw 53 is geared into the ratchet tooth 23b by the motion of a clutch member to be discussed later, and a state wherein power transmission is interrupted by disengagement from the ratchet tooth 23b.

Between the drive element 22 and the ring gear 43 a second one-way clutch 51 is provided. This second one-way clutch 51 only allows a power transmission in progressive direction from the drive element 22 to the ring gear 43. A third one-way clutch 52 is arranged between the gear frame 41 and the hub shell 23 and allows only a power transmission from the gear frame 41 to the hub shell 23 in progressive direction. In contrast to the one-way clutch 50 these two one-way clutches 51, 52 cannot be shifted while being in the state of power transmission.

### Constitution of the Speed Change Operation Mechanism

The speed change operation mechanism 25 allows selecting the power transmission path and comprises a clutch member 45 and a clutch operation section 46.

The clutch member 45 can change the state of the drive element 22 and the gear frame 41 from connection to disconnection and vice versa and, at the same time, it shifts between the states of the one-way clutch 50 (between the state of power transmission and the state of interrupted power transmission). The clutch member 45 is movably and rotably arranged on the outer circumference of the hub axle 21 in axial direction.

The clutch member 45 is, as shown in fig. 8, a cylindrical member with serrated external teeth 45a formed on its circumferential face at one of its end. These serrated external teeth 45a are slideably engaged with the serrated internal teeth 22a. At the other end of the clutch member 45 a part 45b with a larger diameter is formed, on its outer circumferential portion serrated external teeth 45c are formed. The serrated external teeth 45c can engage with the serrated internal teeth 41b of the gear frame 41. Between the part 45b with a larger diameter and one end a tapered face 45d is formed. This tapered face 45d is provided in order to move the clutch claw 53 of the first one-way clutch from the upright position (position of power transmission) shown by the solid line into the withdrawn position (position wherein power transmission is interrupted) shown by the alternate long and two short dashes line. When the clutch member 45 moves from the left side to the deceleration position on the right side, the clutch claw 53b moves along the tapered face 45d onto the part 45b with a larger diameter and falls down into the withdrawn position.

As shown in fig. 7, on the inner circumferential face of the clutch member 45 two stepped portions 45e, 45f are formed with a pitch in axial direction. As shown in fig. 8, the left hand stepped portion 45e has a plurality of cam faces 47 being formed with pitches in circumferential direction. As shown in fig. 9, the cam face consists of a recessing flat face 47a at one end, a rounded face 47b adjacent to the downstream of the progressive direction A of the flat face 47a and an inclined face 47c adjacent to the upstream of said direction. The angle of inclination α of the inclined face 47c relative to the axle center is larger than angle of inclination β of the first through groove 21b and preferably within a range from 20° to 70°.

The clutch operation section 46 has the function to move the clutch member 45 in the axial direction of the hub axle 21 and, being engaged with the clutch member 45, to change the rotary driving force of the clutch member 45 into an axial displacement. The clutch operation section 46 comprises, as shown in fig. 7, a first push rod 48 axially moving within the first operation hole 21a and a speed change key 49 that is pressed onto the gear frame 41 by the push rod 48.

As shown in fig. 7, the push rod 48 comprises an operation element 65 with a definite length, an element for operation 66 mounted movably in axial direction on the tip of the operation element 65, and a first coil spring 60 arranged between the operation element 65 and the element for operation 66. The operation element 65 comprises a rod 68 and an adjacent part 69 screwed into the rod 68. At the tip of the rod 68 a portion 68b with a larger diameter is formed. This threaded portion 68a is screwed into the adjacent part 69. The portion 68b with a larger diameter is slideably mounted in a guide hole 66a formed within the element for operation 66. The guide hole 66a has a reduced diameter toward the operation element 65 so that it cannot slip out. The first coil spring 60 is placed between the end face of the element for operation 66 and the adjacent part 69 in a compressed state and presses onto the operation element 65 and the so that they part from each other. When the element for operation 66 presses onto the speed change key 49, the clutch member 45 presses onto the gear frame 41.

As shown in fig. 8, the speed change key 49 is a rod-shaped member with a triangular cross section. When being pressed it revolves reversed to the direction of progression within the first through groove 21b, i.e. it moves in axial direction while being twisted. As shown in fig. 9, the contact face 49b of the speed change key 49 with the first through groove 21b is formed with an angle approximately parallel to the first through groove 21b. E.g. if the angle of inclination β of the first through groove 21b is 30°, the angle of the contact face 49b relative to the hub axle center is also approximately 30°. Furthermore, a retaining ring 63 mounted within the inner circumference of the other end of the clutch member 45 restricts the movement of the speed change key 49 within the clutch member 45 so that it cannot move outside. Accordingly, it actually cannot protrude from the clutch member 45 (cf. fig. 8) and is pressed onto the first push rod 48 so that it moves the clutch member 45 to the left side in fig. 7.

Furthermore, the speed change key 49 can have contact with the cam faces 47 within the clutch member 45. When the clutch member 45 rotates in the direction of progression A while the speed change key 49 is contacting the flat face 47a of the cam face 47, the speed change key 49 is pressed onto the guide face 21c of the first through groove 21b by the inclined face 47c of the cam face 47 so that its axial movement to the left is restricted and the clutch member 45 is moved to the right in axial direction. Accordingly, the rotary driving force of the clutch member 45 is changed into an axial displacement. This assists the operation of the speed change.

Notched sections 49a are formed at both ends of the speed change key 49, wherein one end of a second coil spring 61 is engaged. The other end of the second coil spring 61 is engaged with the hub axle 21. By this second coil spring 61 the speed change key 49 is constantly pressed onto the clutch member 45. Furthermore, a third coil spring 62 is arranged between the speed change key 49 and the clutch member 45. The total length of this third coil spring 62 is restricted to a definite length by a not shown restriction member. Being compressed, the third coil spring 62 applies a force in such a direction that the speed change key 49 and the clutch member 45 separate from each other before the speed change key 49 contacts the clutch member 45. By this, the distance between speed change key 49 and clutch member 45 will be constant during the movement so that the positions are defined correctly.

The impelling force of the first, second and third coil spring 60, 61, 62 is set lower in this order (from the first to the third coil spring) so that the spring force becomes lower in the same order. If the spring force of the first coil spring 60 was lower than that of the second coil spring 61, the first coil spring 60 would be bent and the speed change key 49 would not move even if the first push rod 48 applied pressure thereon. And if the spring force of the second coil spring 61 was lower than that of the third coil spring 62, the speed change key 49 would not enter into the cam face 47 and thus the operation of speed change would not be assisted even if the second coil spring applies pressure onto the speed change key 49.

Furthermore, it is possible to reduce the spring constant and the spring force of the first coil spring 60 by increasing it coils since it is arranged within a relatively large space between the operation element 65 and the element for operation 66 within the first operation hole 21a. This allows a further reduction of the spring constant and the spring force of the second and third coil spring 61, 62 and therefore a reduction of the force pressing on the first push rod 48 during the shift to acceleration, i.e. the actuation force of the winding lever in the speed change operation section 9 can be reduced. As a result, the tension of the inner cable is reduced so that the inner cable can be protected from rupture.

### Constitution of the First Bell Crank

The first bell crank 26 is mounted on the right hand end of the hub axle 21 in fig. 7. The first bell crank 26 comprises a support bracket 70 mounted on the axle end and a link member 71 rockingly mounted on the support sprocket 71. The support bracket 70 holds the outer casing 73a of speed change cable 73 by engagement, the inner cable 73b is engaged with the link member 71. The tip of the link member 71 is contacting the base end of the first push rod 48. Here, by pulling the inner cable 73b using the speed change operation section 9 pressure is applied on the first push rod 48 and the speed is changed to acceleration. By release of the inner cable 73b the second coil spring 61 applies pressure on the clutch member 45 via the speed change key 49 and the speed is changed to deceleration.

### Speed Change Operation

By means of the planetary gear mechanism 24 and the one-way clutches 50 ∼ 52, the interior speed change hub 10 comprises
a deceleration power transmission path constituted by drive element 22 - ring gear 43 - planetary gear mechanism 24-gear frame 41 - hub shell 23,
a path for directly coupled power transmission constituted by drive element 22 - ring gear 43 - hub shell 23, and
an acceleration power transmission path constituted by drive element 22 - clutch member 45 - gear frame 41 - planetary gear mechanism 24 - ring gear 43 - hub shell 23.

The speeds are changed by operating the first push rod 48 by means of the first bell crank 26 via the speed change cable 73.

### Speed Change from Deceleration to Acceleration

When the first push rod is pushed in, the clutch member 45 is located in the deceleration position at the right end, the revolution from the drive element 22 is reduced via the deceleration power transmission path and transmitted onto the hub shell 23, i.e. the revolution inputted to the drive element 22 is transmitted onto the ring gear 43 via the second one-way clutch 51. In this situation the clutch claw 53 of the first one-way clutch 50 is turned by the clutch member 45 into the withdrawn position shown by the alternate long and two short dashes line in fig. 8 so that the first one-way clutch 50 is in a state of interrupted power transmission. Therefore, the revolution transmitted to the ring gear 43 is transmitted onto the hub shell 23 (via the planetary gear mechanism 24, the gear frame 41 and the third one-way clutch 52). In this case the inputted revolution is decelerated according to the gear ratio defined by the number of teeth of the sun gear 40, the planet gear 42 and the ring gear 43.

When the winding lever of the speed change operation section 9 is actuated, the link member 71 of the first bell crank 26 is rocked and the first push rod 48 is pressed inwards for one step. Therefore, since the spring force of the first coil spring 60 is stronger than that of the second coil spring 61, the speed change key 49 is pressed by the link member 71 via the first push rod 48, guided into the first through groove 21b and moves to the left in fig. 7 while revolving around the hub axle. Via the retaining ring 63 the clutch member 45 is also pushed and moves into the position of direct-coupled power transmission. When the clutch member 45 is placed at the position of direct-coupled power transmission, the clutch claw 53 of the first one-way clutch 50, which was moved into the withdrawn position by the tapered face 45d, returns into the upright position (shown by the solid line in fig. 8) due to the spring force of the twisted coil spring 55. Being in this state, the first one-way clutch 50 can transmit only the progressing revolution from the ring gear 43 to the hub shell 23. Accordingly, the revolution from the drive element 22 is transmitted onto the hub shell 23 via the path for directly coupled power transmission without any change. In other words, the revolution inputted to the drive element 22 is transmitted onto the ring gear 43 via the second one-way clutch 51, then it is transmitted onto the hub shell 23 via the first one-way clutch 50 and thus the revolution of the drive element 22 is transmitted directly onto the hub shell 23 via the ring gear 43. At this time, the revolution is transmitted from the ring gear 43 to the gear frame 41 via the planetary gear mechanism 24 so that the gear frame 41 revolves with decelerated speed, but since the revolution speed of the hub shell 23 is higher than that of the gear frame 41, a transmission of the revolution from the gear frame 41 onto the hub shell 23 via the third one-way clutch 52 does not take place.

When the first push rod 48 is pushed in again from the position of direct coupling by actuation of the winding lever, the speed change key 49 moves to the left, accordingly the clutch member 45 is also moved at the acceleration position. When the clutch member 45 is arranged at the position of maximal acceleration as shown in fig. 7, the serrated external teeth 45c of the clutch member 45 engage with the serrated internal teeth 41b of the gear frame 41. When moving to the acceleration position, the clutch member 45 first contacts the gear frame 41 and then moves to the acceleration position on the left presupposed it was arranged in a position wherein the serrated external teeth 45c engage with the serrated internal teeth 41b. However, if it is arranged at a position of disengagement the leftward movement of the speed change key 49 and the clutch member 45 is stopped when the latter has contacted the gear frame 41. Thereupon, the element for operation 66 of the first push rod 48 retreats so that the first coil spring 60 is compressed and presses on the speed change key 49. When turning into the position wherein the teeth 45c and 41b can engage, the clutch member 45 moves according to the spring force of the first coil spring 60 (via the speed change key 49) and the teeth 45c engage with the teeth 41b.

In this state, the revolution transmitted onto the drive element 22 is transmitted to the hub shell 23 via the acceleration power transmission path. In other words, the revolution is transmitted from the drive element 22 via the clutch member 45 onto the gear frame 41, and then the revolution transmitted onto the gear frame 41 is transmitted onto the hub shell 23 via the planetary gear mechanism 24, the ring gear 43 and the first one-way clutch 50. In this case, the inputted revolution is outputted being accelerated accordingly to the gear ratio defined by the number of teeth of the sun gear 40, the planet gear 42 and the ring gear 43. In this situation, the revolution tends to be transmitted from the drive element 22 to the ring gear 43 via the second one-way clutch 51, but since the revolution speed of the ring gear is higher than that of the drive element 22, a transmission of the revolution via the second one-way clutch 51 does not take place.

Since the revolution is directly transmitted from the drive element 22 to the ring gear 43, it is sufficient to move the clutch member 45 whereon no force is applied when the speed is changed from deceleration to acceleration. Therefore, the spring force of the first coil spring 60 used to push the clutch member 45 can be set at a low value. Since, in addition, the spring force of the second coil spring is even lower, the speed change operation can be performed with a slight force.

Assisting Operation from Acceleration to Deceleration When the release lever of the speed change operation section 9 is actuated in the acceleration position as shown in fig. 7, the impelling force of the first coil spring 60 disappears and the speed change key 49 is pushed by the second coil spring 61 so that the first push rod 48 moves one step backward to the right. Then the speed change key 49 pushes the clutch member 45 via the third coil spring 62 so that the clutch member tries to move into the position of direct-coupled power transmission (direct-coupled position). If no driving force is transmitted when the bicycle is not pedaled, the clutch member 45 detaches from the gear frame 41 and moves into the direct-coupled position). But when the bicycle is pedaled, it can happen that the serrated internal teeth 41b and the serrated external teeth 45c remain in engagement due to friction force, because driving force is transmitted from the clutch member 45 onto the gear frame 41. In such cases the clutch member 45 cannot be moved to the right in fig. 8 by the spring force of the second coil spring 61 alone. In this situation, the speed change key 49 is, when it is contacts the flat face 47a of the cam face 47, pressed (by the revolution of the clutch member 45 in the progressing direction A) onto the guide face 21c with the length corresponding its part being inserted into the first through groove 21b. Furthermore, an escape in axial direction is made difficult due to the applying friction force. As a result, the clutch member 45 moves to the right when the speed change key 49 moves along the inclined face 47c in upward direction. When the serrated internal teeth 41b and the serrated external teeth 45c disengage, the clutch member 45 is, via the speed change key 49, pushed into the direct-coupled position by the second coil spring 61. In other words, the rotary movement of the clutch member 45 is changed into an axial displacement due to the contact of the speed change key 49 with the cam face 47 of the clutch member 45 in order to assist the speed change.

In this situation, the speed change key 49 is pressed by the second coil spring 61 and almost cannot escape axially to the left (as stated above) since the first through groove 21b is inclined relative to the center of the axle and helically twisted. Therefore, the speed change key 49 does not escape in axial direction when a driving force has been transmitted that does not exceed the force corresponding to the impelling force of the second coil spring 61 and the friction force between the speed change key 49 and the guide face 21c. However, if a stronger driving force is applied the clutch member 45 incidentally does not move and the speed change key 49 incidentally overcomes the impelling force of the second coil spring 61 and the friction force between the speed change key 49 and the guide face 21c and then escapes in the axial direction. This friction force can be defined by the angle of inclination β of the groove. If the angle of inclination β of the groove is chosen too large the movement of the speed change key 49 to the left becomes difficult when the first push rod 48 presses on it. However, if the angle of inclination β of the groove is chosen too small, the resistance of the speed change key 49 when being pressed by the first push rod 48 decreases but the friction force also decreases. Therefore, the angle of inclination β of the groove is set preferably within a range from 10° to 55°. Furthermore, the limit driving force whereat the speed change key 49 escapes during the assistance can be adjusted by an adjustment of this angle of inclination β of the groove, the angle of inclination α of the inclined face 47c of the cam face 47 and the spring force of the three coil springs 60, 61, and 62.

In cases when the speed change key 49 escapes axially due to an applied a driving force exceeding the set driving force and the clutch member 45 does not move, the clutch member 45 can be pushed to the left due to the assisting force of the speed change key 49 when the driving force becomes weaker when the gear crank 18 has reached its upper or lower dead center. Therefore, the speed is not changed when an extremely strong driving force is applied, e.g. on steep sloping roads. By this, speed change shocks are reduced and parts used for power transmission, e.g. the serrated teeth and the one-way clutches, are prevented from damage.

When the clutch member 45 moves, the speed change key 49 is separated from the cam face 47 by the third coil spring 62. This prevents the generation of unusual sounds which could be produced when the clutch member 45 rotates and has contact with the speed change key 49. When the clutch member 45 is located at the direct-coupled position, the revolution is transmitted from the drive element 22 onto the hub shell 23 via the path for directly coupled power transmission as described above.

When the release lever is actuated while the clutch member 45 is located at the direct-coupled position, the first push rod is further moved back and pressure is applied from the speed change key 40 onto the clutch member 45. In this situation, the tapered face 45d of the clutch member 45 contacts the clutch claw 53 of the first one-way clutch 50 which then tries to turn from the upright position into the withdrawn position. However, since motive power is transmitted from the ring gear 43 onto the hub shell 23, it is hard to turn the clutch claw 53 into the withdrawn position only by application of the impelling force of the second coil spring 61 alone. Also in this case an assisting force is generated in the same way as described above when the speed change key 49 is contacting the cam face 47 of the clutch member 45. Therefore, the clutch member 45 is moved in axial direction and it is possible to turn the clutch claw 53 down.

Since here the revolution is directly transmitted onto the ring gear 43 without using the clutch member 45, the actuating force being necessary when changing the speed from deceleration to acceleration can be reduced. In addition, a speed change from acceleration to deceleration can be performed with a slight actuating force while continuing pedaling, since the change of the rotary force of the clutch member 45 into an axial displacement is assisted.

### Constitution of the Rotation Restriction Mechanism

The rotation restriction mechanism 27 is linked with the handle control section 12 via the control cable 80; the handle control section 12 and the control cable 80 constitute an antitheft system 20.

The rotation restriction mechanism 27 comprises a restriction section 90 that can take a state wherein the rotation is restricted until a torque of a definite minimum value is applied to the hub shell 23 and a state wherein the restriction of the hub shell 23 is released (restriction release state), a switching section 91 that changes the state of the restriction section 90, and a second bell crank 92 for the actuation of the switching section 91.

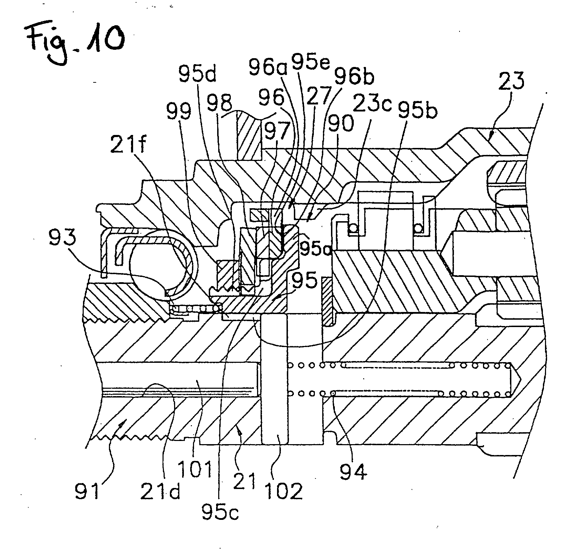

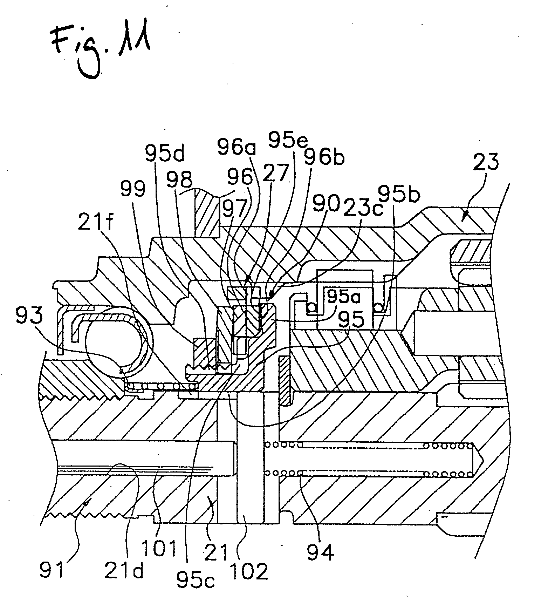

As shown in fig. 10 and fig. 11, the restriction section 90 comprises a locking member 95 mounted non-rotably and movably in axial direction on the outer circumferential face of the hub axle, an engagement member 96 rotably mounted on the locking member 95, a washer member 97 contacting the engagement member 96, a disk spring 98 pressing onto the engagement member 96 via the washer member 97, and a nut member 99 for the adjustment of the spring force of the disk spring 98.

The locking member 95 is a cylindrical member with a flange 95a, on its inner circumferential face a corrugated section 95b is formed which engages with the serrated teeth 21f formed on the outer circumferential face of the hub axle 21. Furthermore, an engaging groove 95c and a male thread 95d are formed on the outer circumferential face of its cylindrical part in order to non-rotably support the washer member 97 and the disk spring 98 (by engagement). On the face of the flange 95a (on the left in fig. 10) a ray-shaped corrugated section 95e is formed for restriction and sound producing purposes. The locking member 95 is provided axially movable between a restriction release position shown in fig. 10 and a restriction position shown in fig. 11. The locking member 95 is impelled to the restriction position by a fourth coil spring 93 arranged on the outer circumference of the hub axle 21.

The engagement member 96 has the shape of a disk and has, on its outer circumference, an recessing portion 96a which engages with the engagement teeth 23c being formed with pitches on the inner circumferential face of the hub shell in circumferential direction. When this recessing portion 96a engages with the engagement teeth 23c the engagement member 96 becomes unable to perform a rotation relative to the hub shell 23. At the side opposing the ray-shaped corrugated section 95e of the flange 95a a ray-shaped corrugated section 96b is formed that engages with the corrugated section 95e. A sound is produced, when both of the corrugated sections 95e, 96b perform a relative rotation.

The washer member 97 is to transmit the pressing force of the disk spring 98 onto the engagement member 96 and is mounted non-rotably on the locking member 95. The disk spring 98 is mounted non-rotably on the locking member 95 and applies a pressing force onto the engagement member 96. The nut member 99 is screwed on the male thread 95d and is provided for the adjustment of the pressing force of the disk spring 98. By the adjustment of this pressing force the degree of the rotation restriction given in the restriction state can be adjusted.

The restriction section 90 is movable between a restriction position wherein the engagement member 96 engages into the engagement teeth 23c of the hub shell 23, and a restriction release position wherein it is detached from the engagement teeth 23c. When being at the restriction position the hub shell 23 is in a state of restriction, i.e. the revolution of the hub shell 23 and thereby the revolution of the rear wheel 7 is subjected to restriction. The switching section 91 (section for the restriction operation) comprises a second push rod 101 axially movable within the second operation hole 21d by being pushed by the bell crank 92, and a restriction key 102 that is pushed to the center by the second push rod 101.

The second push rod 101 has the shape of a rod and its tip protrudes a little bit from the left-hand end of the hub axle 21 in fig. 7. It is pushed by the second bell crank 92 and moves between the restriction release position shown in fig. 10 and the restriction position shown in fig. 11.

The restriction key 102 is movable between the restriction position and the restriction release position within the second through groove 21e and is contacting the base end of the second push rod 101 (right edge of fig. 7). The inner circumference of the locking member 95 is engaged with both ends of the restriction key 102. Thereby, the movement of the locking member 95 to the right side in fig. 7 is restricted by the restriction key 102. The movement to the left side in fig. 7 is not subjected to restriction, but since it is impelled by the fourth coil spring 93 to the right side in fig. 7 so that it usually touches the restriction key 102. The restriction key 102 is impelled to the left in fig. 10 (i.e. to the restriction release position) by a fifth coil spring 94 mounted in the second operation hole 21d. The impelling force of this fifth coil spring 94 is stronger than that of the fourth coil spring 93. Therefore, the second push rod 101 is impelled via the restriction key 102 by the fifth coil spring 94 when the second bell crank 92 moves into the restriction release position, and the second push rod thus moves into the restriction release position.

The second bell crank 92 is mounted on the left-hand end of the hub axle 21 in fig. 7. It comprises a support bracket 105 and a link member 106 rockingly supported by the support bracket 105. At this support bracket 105 an outer engaging section (not shown) is provided wherein the outer casing 80c of the control cable 80 engages. At the link member 106 an inner engaging section (not shown) is provided wherein the inner cable 80a engages. The tip of the link member 106 is contacting the tip of the second push rod 101. At this point, the link member 106 is rocks when the inner cable 80a is pulled using the lever element 28 of the handle control section 12. Accordingly, the second push rod 101 is pushed and the change-over operation to the restriction position is conducted. By loosening the inner cable 80a the lock member 95 is pushed via the restriction key 102 by the fifth coil spring 94 so that change-over operation to the restriction release position is conducted.

### Operation of the Antitheft System

In order to switch the antitheft system 20 to restriction, the key 82b is turned within the lock body 82a. The rocking element 82c is moved by this action and accordingly the movable member 83 is moved back from the lever element 28. Therefore, the projection 83b of the movable element 83 separates from the engagement groove 28g and the lever element 28 becomes rotable. In this state the lever 28 is turned from the restriction release position shown by the alternate long and two short dashes line in fig. 2 to the restriction position indicated by the solid line. After having turned the lever element 28 into the restriction position the key 82b is turned into its original position and pulled off. By this, the movable member 83 advances within the long engagement groove 28f and engages therein so that the lever element 28 is held in the restriction position and locked there by pulling off the key 28b. Thus, the movable member 83 cannot move to the restriction release position.

When the lever element 28 is turned into the restriction position, the restriction pin 29c moves to the upper advanced position due to the effect of the cam face 28a and engages with one of the engagement holes 78b of the engagement disk 78. Thereby the engagement disk 78 becomes non-rotable and the rotation of the rotable member 74 which touches the corrugated section 78a of the engagement disk 78 with its corrugated section 74c is subjected to restriction. Thus, the rotation of the front fork 3 is also restricted. The engagement disk 78 is pressed by the spring 79 shaped like a corrugated plate so that, when a strong torque is applied to the handle section 4 in this situation, this torque is transmitted to the rotable member 74. Thereupon the engagement disk 78 escapes downwards so that it slips from the rotable member 74. Accordingly, the handle section 4 can be rotated if a strong torque is applied thereto.

Furthermore, the second bell crank 92 moves from the restriction release position to the restriction position when the lever element 28 is turned into the restriction position and the inner cable 80a of the control cable 80 is pulled thereby. By this, the second push rod 101 is pushed, the restriction key 102 moves to the right in fig. 7 and the lock member 95 which was impelled by the fourth coil spring 93 moves from the restriction release position into the restriction position. Therefore, the engagement member 96 engages into the engagement teeth 23c of the hub shell 23 so that it cannot rotate relative to the hub shell 23. Since the rotation of the engagement member 96 relative to the hub shell 23 is restricted by the impelled (pressed) lock member 95, the rotation of the hub shell 23 is also subjected to restriction. Therefore, the handle control section 12 and at the same time the rotation restriction mechanism 27 of the interior speed change hub 10 can be both set into a state of restricted rotation by only one action, i.e. turning the lever element 28 into the restriction position. By turning the lever element 28 back into the restriction release position, both (handle control section 12 and rotation restriction mechanism 27) are set back into a state wherein the restriction of rotation is released.

### Other Embodiments of the Invention

In the antitheft system according to the embodiment of the invention as described above, the handle control device and the rotation restriction mechanism are constituted in a way that the rotable member and the hub shell can be turned or rotated in the restriction state when a torque exceeding a definite value is applied. Alternatively, the rotable member and the hub shell can be locked non-rotably. In this case, the antitheft effect becomes still stronger.

Within the embodiment of the invention as described above a rear wheel interior speed change hub 10 is given as example for a bicycle hub, but the invention can also be applied to front wheel hubs, ordinary rear wheel hubs without interior speed change mechanism, and also to hubs used for external speed change gears.

### Advantages of the Invention

According to the handle control device for bicycles of the present invention, the front fork (handle) can be kept in a state of restricted rotation because the actuation member is continuously locked at the restriction position and this locked state cannot be released without a key. Since it is difficult to operate the handle when being in the state of restricted rotation, the bicycle cannot be easily stolen. Therefore, the handle control device can also have the function of an antitheft device.

The bicycle hub of the present invention allows providing a cheap bicycle hub with a simple constitution since the rotation restriction means is moved axially to the hub axle by a rod member movable in the same direction so that the coupling means can be realized with a simplified construction.

According to the antitheft system of the present invention a handle control device for bicycles and a bicycle hub which both can take a state of restriction are linked by means of a control cable so that they can be switched to this restricted state at the same time. Therefore, it causes more difficulties to release the restricted state so that a theft is made more difficult.

### Brief Description of the Drawings

- Fig. 1: is a left-side view of a bicycle to which one embodiment of the invention is applied.
- Fig. 2: is a perspective view on the handle control device of fig. 1.
- Fig. 3: is a sectional view of the handle control device.
- Fig. 4: is a plan view of the lever element.
- Fig. 5: is a sectional view of a part of the handle control device.

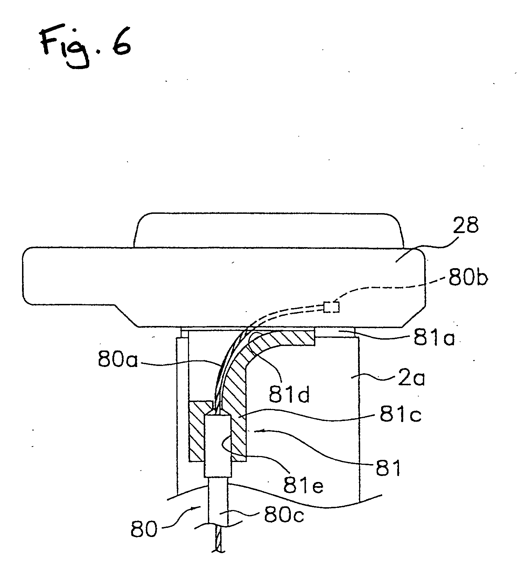

- Fig. 6: is a sectional view of a part of the handle control device.
- Fig. 7: is a sectional view of an interior speed change hub.
- Fig. 8: is a perspective view of important parts of the mechanism for the speed change operation.
- Fig. 9: is a schematic view showing the relation between speed change key and cam face.
- Fig. 10: is an enlarged sectional view showing the mechanism for rotation restriction in its state of released restriction.
- Fig. 11: is an enlarged sectional view showing the mechanism for rotation restriction in the restricted state.

### Description of the Reference Numerals

- 1: frame
- 2a: head tube
- 3: front fork
- 10: interior speed change hub
- 12: handle control section
- 21: hub axle
- 21d: second operation hole (first guide section)
- 21e: second through groove
- 23: hub shell
- 27: rotation restriction mechanism
- 28: lever element (actuation element)
- 29: restriction section
- 71: base member
- 74: rotable member
- 75: stationary member
- 76: rotation restriction mechanism
- 77: lock mechanism
- 80: control cable
- 82: lock
- 82a: key
- 82c: rocking element
- 83: movable member
- 92: second bell crank
- 95: locking member
- 96: engagement member
- 101: second push rod
- 102: restriction key

## Claims

1. A handle control device for bicycles that restricts the rotation of a front fork being rotably supported on a head tube of a bicycle frame, comprising:
- a rotable member that performs a rotating movement coupled to the rotation of the front fork,
- a stationary member provided non-rotably on the head tube,
- a rotation restriction means which comprises an operating element being movable between the position of restriction and the position at which the restriction is released (restriction release position) and which restricts the relative rotation of the rotable member and stationary member at the position of restriction and releases this restriction at the restriction release position, and
- a locking means which comprises a lock with an attachable and detachable key and a rocking element movable by said key, and a movable element that is movable coupled to the movement of the rocking movement, and which locks aforementioned operating element at the restriction position by action of the movable element when the operating element is located at said restriction position.

2. The handle control device for bicycles according to claim 1, wherein a first cable engagement portion arranged at the rotation restriction means and being engageable with a control cable.

3. The handle control device for bicycles according to claim 1 or 2, wherein the operating element is a lever element being provided rotably around the head tube axle.

4. The handle control device for bicycles according to one of the claims 1 to 3, wherein a base member is arranged non-rotably at the head tube, the lock is fixed to said base member, and the movable member is arranged on the base member in such a manner that it can perform a forward and backward movement relative to the operating element.

5. The handle control device for bicycles according to one of the claims 1 to 4, wherein the rotation restriction means allows a relative rotation of the rotating element when it is located at the restriction position and a torque exceeding a definite value acts on it.

6. A bicycle hub constituting a wheel being rotably mounted on a bicycle frame, comprising:
- a hub axle which is mounted non-rotably on the bicycle frame and which has a first guide portion being open to the first end of said hub axle and formed parallel to the axle core, and a second guide portion formed in radial direction relative to the first guide portion and having two ends both opened towards the circumferential face,
- a rod member mounted movable in axial direction in the first guide portion,
- a hub shell mounted rotably on the hub axle,
- a rotation restriction means mounted non-rotably on the circumferential face of the hub axle and movable in aforementioned axial direction between a first position at which it is connected non-rotably with the hub shell and a second position at which it detaches from the hub shell, and
- a coupling means which is mounted movably in aforementioned axial direction in the second guide portion and which moves said rotation restriction means coupled to the movement of said rod member.

7. The bicycle hub according to claim 6, wherein the coupling means has a key member having two ends protruding into the second guide portion.

8. The bicycle hub according to claim 6 or 7, having a pushing means being mounted on the axle hub and able to apply pressure on the protruding end of the rod member which is arranged in a way that one of its ends protrudes from the first end of the hub axle, and a second cable engaging portion located at said pushing means and engageable with the control cable for the operation of aforementioned rotation restriction means.

9. The bicycle hub according to claims 6 to 8, wherein the rotation restriction means allows a rotation relative to the hub axle when it is located at aforementioned first position and a torque exceeding a definite value acts on the hub shell.

10. The bicycle hub according to claim 9, wherein the rotation restriction means produces a sound when it is located at aforementioned first position.

11. The bicycle hub according to claim 6 to 10 having a driving element for transmission of the revolution of the bicycle crank onto the hub shell.

12. The bicycle hub according to claim 11 having a speed change means with a plurality of speed steps being arranged between the driving element and the hub shell.

13. The bicycle hub according to claim 12, wherein speed changes can be performed from the aforementioned first end of the axle hub and its second end located at the opposite side of said first end.

14. An antitheft system for bicycles comprising:
- a handle control device for bicycles which can take a first state of restriction, wherein the rotation of the bicycle front fork is restricted, and a first restriction release state, wherein this restriction is released,
- a bicycle hub which can take a second restriction state, wherein the rotation of a bicycle wheel is restricted, and a second restriction release state, wherein this restriction is released, and
- a control cable connecting said handle control device and said bicycle hub and which changes the state of the bicycle hub from the second state of restriction to the second restriction release state and vice versa accordingly to changes between the first state of restriction and the first restriction release state.

15. The antitheft system for bicycles according to claim 14, wherein the handle control device for bicycles is a handle control device for bicycles according to one of the claims 2 to 5.

16. The antitheft system for bicycles according to claim 14, wherein the bicycle hub is a bicycle hub according to one of the claims 6 to 13.

17. The antitheft system for bicycles according to claim 16, wherein the control cable is engageable with said first cable engagement portion and said second cable engagement portion.
